# EUROPEAN PATENT APPLICATION

(11) **EP 2 827 040 A1**
(43) Date of publication of application: **21.01.2015**
(21) Application number: 14177756.5
(22) Date of filing: 21.07.2014
(51) Int. Cl.: F16L 55/165, B32B 1/08, B32B 5/02, B32B 5/26, B32B 27/12

(54) **A reinforced liner for renovation of underground pipe systems, a method of producing a reinforced liner and a method of installing a reinforced liner into a pipe line**

(30) Priority: 19.07.2013 EP 13177201
(71) Applicant: Per Aarsleff A/S, 8230 Abyhoj (DK)
(72) Inventor: Boyer, Manfred, 8230 Aabyhøj (DK); Rasmussen, Bent Sloth, 8230 Aabyhøj (DK); Lystbaek, Peter, 8230 Aabyhøj (DK)
(74) Representative: Nielsen, Henrik Sten

(57) **Abstract**

A liner for renovating underground pipes such as sewer pipes, which liner comprises an inner part comprising a layer of web material of radially and longitudinally oriented fibres. Furthermore, the liner comprises an intermediate part comprising a layer of randomly oriented fibres, which intermediate part encircles the inner part, and an outer part comprising a layer of web material of radially and longitudinally oriented fibres, which outer part encircles the intermediate part, the inner part, intermediate part and outer part being resin impregnated or resin impregnable, each of the inner part, intermediate part and outer part are folded to a tubular shape by defining overlapping opposing first and second longitudinal edge sections.

## Description

The present invention relates to a reinforced liner for renovation of underground pipe systems, a method of producing a reinforced liner and a method of installing a reinforced liner into a pipe line.

### BACKGROUND

When pipe systems are to be renovated, trench-less methods are applied using liners, i.e. tubes of fibre reinforced composite material. For instance leaky, worn and poorly maintained pipes such as sewer pipes are renovated applying liners inside the pipes. The renovation is carried out in order to avoid infiltration and leakage that could be damaging to the environment. The tasks are either to execute preventive maintenance or to perform acute repairs to prevent further damage, e.g. sieving out of fluids. The renovation by applying liners can also take place in underground pipe systems, e.g. renovation of sewer pipes and manholes. Typically, so called cured-in-place liners are used.

Occasionally, the renovation can also take place above the ground, e.g. renovation of vertical pipes such as process pipes, downpipes, vent ducts etc. e.g. vertical pipes and duct systems for housing associations, in public buildings and for private house owners.

The major advantage of the trenchless rehabilitation methods, by which the rehabilitation takes place from the inside as opposed to from the outside, is that the work can be done fast and with a minimum of inconvenience to the traffic, production, businesses and residents.

When performing a trenchless renovation of a pipe line, a tubular liner is either pulled into or inverted into the pipe. A standard liner hose comprises one or more layers of an impregnable material such as a felt material or similar fibre material in which the fibres have a random orientation. The layer or layers of impregnable material should be impregnated by a curable resin. The layer or layers may further be enclosed on one or both sides by a waterproof plastic foil.

In order to be able to use the same liner for various pipe diameters, e.g. for pipes having deformations, the felt material may have a certain radial flexibility in order to adapt to the wall of the pipe. The liner should adapt to the wall of the pipe in order to avoid any space in-between the liner and the wall of the pipe. Such spaces may cause leakage from the outside. However, a radial flexible liner will have the disadvantage of a non-uniform thickness at the locations which differ from the standard diameter, i.e. at the locations where the liner is assuming a stretched state it will be thinner than at the locations where the liner is relaxed.

Further, a flexible liner made of felt material may also be stretched in the longitudinal direction. In case the liner is stretched in the longitudinal direction, apart from the above problems arising from differences in the wall thickness of the liner, the liner may be difficult to handle before it has been cured. It may also be difficult to achieve a secure position of the liner inside the pipe unless the liner has assumed its relaxed position.

Prior art documents include US 5,798,013 which discloses a method of producing a tubular liner comprising overlapping fibrous strips which are displaced with respect to each other.

Further prior art includes EP 1 155 256 or WO 00/50801 which discloses a liner hose comprising multiple fibrous layers. Each layer comprises a laminate structure of bonded first and second sublayers. The first sublayer comprises a web of crossing flat fibreglass threads, whereas the second sublayer comprises a fibrous material of which a high proportion is oriented in a transversal direction. In this way the liner hose will be sufficiently unstrechable.

EP 0 454 103 discloses a method of manufacturing innerback tube for reconditioning a pipeline. The tube comprises a woven cloth tube, non-woven felt sheet and a woven cloth tube.

EP 1 920 913 assigned to the applicant company discloses a lining assembly. The lining assembly is composed of a first mat of fibrous material, a second layer including reinforcement strands, a third layer constituting a capillary breaking layer, and a fourth layer constituting a second mat of fibrous material.

WO 2009/155173 discloses an apparatus and method for reinforcing a conduit or vessel. A web is used comprising a plurality of fabric layers.

US 3,813,313 describes a method and apparatus for making hose. The hose comprises a web or reinforcing material and one or more layers of flexible polymeric material.

WO 2007/054350 discloses a flexible insert tube for the lining of pipelines and of ducts, in particular sewers. The tube has at least two sublayers of which the first sublayer has fibres composed of inorganic material, whereas the second sublayer has fibres composed of organic fibres.

EP 0 876 898 discloses an apparatus for producing a tube of several layers of material. The apparatus comprises a winding core having a deflecting bracket allowing each layer of material to completely enclose the winding core.

WO 96/19693 discloses a lining hose comprising an outer glass fibre chopped strand mat, an intermediate voluminous glass fibre mat and an inner glass fibre chopped strand mat.

US 6,679,966 relates to a liner with a tubular film that is coated with a nonwoven layer facing the resin impregnated fibre bands.

DE 203 20 160 U1 discloses a form collar for forming a foil into a tube.

EP 0 275 060 discloses a lining tube comprising an outer impermeable coating and an inner two-layered part or layers of resin impregnable felt.

EP 0 712 352 discloses a method of producing a tubular lining hose in which the winding operation takes place on a winding mandrel consisting of at least two fingers.

WO 03/038331 discloses a fabric for reinforcing a pipe. The fabric comprises a first layer of substantially randomly oriented fibres and a second layer of chopped fibres having a substantially parallel alignment.

EP 1 590 594 describes a tubular liner defining two sheets which overlap on both edges at two locations.

WO2010/033297 describes a liner tube including an inner two-layered part, an outer two-layered part, a first intermediate part overlapping itself and a second intermediate part overlapping itself.

WO 95/04646 discloses a method of producing a liner hose. The liner hose includes a fibre hose and a protective foil which are formed by helical windings using a mandrel.

EP 2 573 442 A1 relates to an impregnated fibre tube including an outer layer, an impregnated layer, a fastening layer and an inner polymeric layer having a barrier layer.

### Summary of the invention

It is thus known in the prior art to produce liners having a sandwich structure in order to be able to maintain the longitudinal strengths of the liner while allowing the liner to adapt to differentiating diameters of the pipe to be renovated. It is evident that a large amount of web material will make the liner very rigid and strong in the longitudinal direction, whereas the shear strength will be lower due to the lower amount of resin capable of entering the liner. On the other hand, a liner made by chopped strand mat material only will be difficult to install due to its large flexibility. The object of the present invention is thus to improve the sandwich structure in order to optimize the flexibility of the liner in the longitudinal, radial and shear strength of the liner.

The above object together with numerous other objects which will be evident from the below detailed description of the presently preferred embodiment of the present invention is according to a first aspect of the present invention obtained by a liner for renovating underground pipes such as sewer pipes, said liner comprising:
an inner part comprising a layer of web material of radially and longitudinally oriented fibres,
an intermediate part comprising a layer of randomly oriented fibres, said intermediate part encircling said inner part, and
an outer part comprising a layer of web material of radially and longitudinally oriented fibres, said outer part encircling said intermediate part, said inner part, intermediate part and outer part being resin impregnated or resin impregnable, each of said inner part, intermediate part and outer part being folded to a tubular shape by defining overlapping opposing first and second longitudinal edge sections.

By providing inner and outer parts which are reinforced by a layer of web material, the liner will have a high strength in the longitudinal direction. When installing the liner, the inner and outer parts will provide the required stability and strength to ensure that the liner will have a well defined position within the pipeline. The web material should in the present context be understood to comprise radially and longitudinally oriented fibres providing a high tensile strength in both the radial and the longitudinal direction. The longitudinal direction is understood to mean the direction of the pipe line, whereas the radial direction is understood to be the circumferential direction transversal to the longitudinal direction. Web material should in the present context be understood to mean both woven and non-woven configurations, whereas woven wood materials clearly exhibit fibres of dominating orientations, i.e. radial and longitudinal, non-woven wood materials often include fibres of random orientation, however, dependent on the actual technique of providing the non-woven configuration, even non-woven materials may exhibit dominating fibre orientation such as those described in the present text as transversal and longitudinal direction. The fibres may be natural or synthetic fibres or any of carbon fibres, aramid fibres or sisal fibres.

The inside of the liner is filled by at least one layer of randomly oriented fibres, i.e. in-between the layers of web material, in order to form a sandwich structure. In this way a very strong structure is achieved in which the tensile strength in the transversal and longitudinal direction is achieved by the web material for absorbing any bending forces applied to the liner. The shear forces applied to the liner is consequently absorbed by the layer of randomly oriented fibres. The fibres should have a random orientation in order to be able to absorb a large amount of resin. "Random" should in the present context be understood as a bunch of entangled fibres having no preferred orientation, i.e. over a large number of fibres, any orientation is at least approximately equally likely to occur.

Each of the inner part, intermediate part and outer part are mutually overlapping at their respective opposing longitudinal edges. The liner is thus formed by liner tubes wherein each layer overlaps itself. In this way, the liner will have a radial flexibility and may adapt to variations in diameter of the pipeline. Thus, in case the wall of the pipe line exhibits a small void, the diameter of the pipeline will increase at this location and the liner will consequently expand and the overlapping longitudinal edge sections will be smaller. Conversely, in case the wall of the pipeline exhibits a protrusion, the diameter of the pipeline will decrease at this location and the liner will consequently contract and the overlapping longitudinal edge sections will be larger.

It is understood that the fibres making up the layer or randomly oriented fibres and the web material should be compatible with the resin used for the impregnation. The diameter of the liner should at least approximately correspond to the diameter of the pipeline and typically a submeasure of 1% to 60%, preferably 4% to 10%, is used. The diameter of the pipe line may range from a few cm to several m.

According to the presently preferred embodiment of the first aspect, the inner part and the outer part of the liner constitute two-layer parts. Additionally, the intermediate part further preferably constitutes a multiple layer part.

According to a further embodiment of the first aspect, the liner comprises an inner layer of fleece material. In this way, the liner, once cured, will exhibit an increased resistance towards leakage. In order to avoid any leakage of resin into the pipe line and avoid pressurized air from entering the liner, the fleece material may be included together with a plastic foil.

According to a further embodiment of the first aspect, the inner part comprises an inwardly facing layer of randomly oriented fibres bonded to the layer of web material, and/or, the outer part comprises an outwardly facing layer of randomly oriented fibres bonded to layer of web material.

The web material of the inner and outer parts have respective bonded layers of randomly oriented fibres, such as chopped strand mat material. The bonding may e.g. be a stitch bonding or powder binding. The layer of randomly orientated fibres is facing such that the outer surface of the outer part and/or the inner surface of the inner part comprise randomly orientated fibres. In this way, the outer and inner surfaces of the liner will be resin impregnated and when cured form a very hard and rigid surface. The liner will also be able to stick to the surroundings in order to achieve a more secure positioning of the liner within the pipeline. This is very advantageous since the randomly orientated fibres are able to absorb a larger amount of resin than the web material.

According to a further embodiment of the first aspect, the outer part and/or the inner part comprise further layers of web material of radially and longitudinally oriented fibres. In this way additional reinforcement is achieved when relining larger pipelines.

According to a further embodiment of the first aspect, the overlapping opposing longitudinal first and second edge sections are all located at the same side and/or opposing sides of the liner when the liner assumes a flat position. It is evident that the overlapping opposing longitudinal first and second edge sections of the liner may be located on opposing sides of the liner. However, in case the overlapping opposing longitudinal first and second edge sections are all located at the same side of the liner when the liner assumes a flat position, it will be easier for the liner to adapt to different diameters within the pipeline since the adjustments will take place approximately at the same location. Preferably, the overlapping sections are mutually separated in order to avoid a large bulge at overlapping section.

According to a further embodiment of the first aspect, the layer of web material and/or the layer of randomly oriented fibres comprise glass fibres and/or polymeric fibres and/or any of carbon fibres, aramid fibres or sisal fibres. Both glass fibres and polymeric fibres provide a very high tensile and compressive strength.

According to a further embodiment of the first aspect, the layer of randomly oriented fibres comprise 1-50% radially oriented fibres. A larger amount of radially oriented fibres will improve the tensile strength of the liner in the transversal direction.

According to a further embodiment of the first aspect, the web material defines 120-600 gram per square meter in the longitudinal orientation. Extensive laboratory experiments made by the applicant has shown that the above amount of web material provide a very high tensile and compressive strength of the liner in the longitudinal direction, while allowing the liner to be easily handled.

According to a further embodiment of the first aspect, the web material defines 100-5000 gram per square meter in the radial orientation. Extensive laboratory experiments made by the applicant have shown that the above amount of web material provides a very high tensile and compressive strength of the liner in the radial direction, while allowing the liner to be easily handled.

According to a further embodiment of the first aspect, the chopped strand mat material defines 100-6000 gram per square meter, preferably 500-2000 gram per square meter. Extensive laboratory experiments made by the applicant have shown that the above amount of randomly oriented fibres allows the material to be able to absorb a large amount of resin, while allowing the liner to be easily handled.

According to a further embodiment of the first aspect, the outer part and/or the inner part are stretchable. The outer and inner parts are typically stiff, however, in some cases they may be slightly stretchable in order to be able to adapt to slight uneven surfaces within the pipeline.

According to a further embodiment of the first aspect, the web material comprises woven material, non-woven material or chopped strand mat material. The above are examples of suitable material for the web material.

According to a further embodiment of the first aspect, the layer of randomly oriented fibres comprises chopped strand mat material, needle felt, Raschel, or foamed material. The above are examples of suitable material for the randomly oriented fibres.

According to a further embodiment of the first aspect, the liner hose further comprises an inner liquid-tight plastic film located such that the inner two-layered part encircles the first liquid-tight plastic film. The inner plastic film will prevent any resin from leaking and will aid in the placement of the liner by means of steam or pressurized air.

According to a further embodiment of the first aspect, the liner hose further comprises an outer liquid-tight plastic film enclosing the outer two-layered part. The inner plastic film will prevent any resin from leaking and will aid in the handling of the liner. It will also form the inner film in case the liner is inverted.

According to a further embodiment of the first aspect, the number of intermediate parts is between 1 and 100, preferably between 2 and 10, such as 3, 4, 5, 6, 7, 8 or 9. The above values are typical numbers of layers which may be used for increasingly larger diameters of the pipe line.

The above object together with numerous other objects which will be evident from the below detailed description of the presently preferred embodiment of the present invention is according to a second aspect of the present invention obtained by a method of producing a liner for renovating underground pipes such as sewer pipes by providing a mandrel, the method comprising the steps of:
positioning an inner part comprising a layer of web material of radially and longitudinally oriented fibres onto the mandrel such that the inner part is being folded to a tubular shape by defining overlapping opposing first and second longitudinal edge sections,
positioning an intermediate part comprising a layer of randomly oriented fibres encircling the inner part and being folded to a tubular shape by defining overlapping opposing first and second longitudinal edges sections, and
positioning an outer part comprising a layer of web material of radially and longitudinally oriented fibres, the outer part encircling the intermediate part and being folded to a tubular shape by defining overlapping opposing first and second longitudinal edges sections,
removing the liner from the mandrel, and
impregnating the liner with a resin.

The above method according to the second aspect is preferably used for producing any of the liners according to the first aspect of the present invention. The mandrel preferably includes a collar for performing the folding of the parts of the liner. The collar may be removable for easy repair. The mandrel is typically made of metal, such as steel. The mandrel may be oriented vertically or horizontally. The mandrel may be cylindrical and may be adjustable.

The above object together with numerous other objects which will be evident from the below detailed description of the presently preferred embodiment of the present invention is according to a third aspect of the present invention obtained by a method of renovating a pipeline comprising the steps of:
providing a liner, the liner comprising:
   an inner part comprising a layer of web material of radially and longitudinally oriented fibres,
   an intermediate part comprising a layer of randomly oriented fibres, the intermediate part encircling the inner part, and
   an outer part comprising a layer of web material of radially and longitudinally oriented fibres, the outer layer encircling the intermediate part,
      the inner part, intermediate part and outer part being resin impregnated, each of the inner two-layered part, intermediate part and outer two-layered part being folded to a tubular shape by defining overlapping opposing first and second longitudinal edge sections,
   inserting the liner into the pipeline, and
   curing the liner.

The above method according to the third aspect is preferably used for installing any of the liners according to the first aspect of the present invention. The insertion of the liner may be performed according to the state of the art, i.e. either by pulling the liner into the pipe line, or alternatively by the so called eversion process in which the liner is inverted into the pipe line by means of pressurized air or steam.

### BRIEF DESCRIPTION OF THE DRAWINGS

FIG. 1 is the production method of the liner.
FIG. 2 is the finished liner.
FIG. 3 is an alternative embodiment of the liner.
FIGs 4 are various alternative liner configurations.
FIG. 5 is the installation of the liner.

### DETAILED DESCRIPTION OF THE DRAWINGS

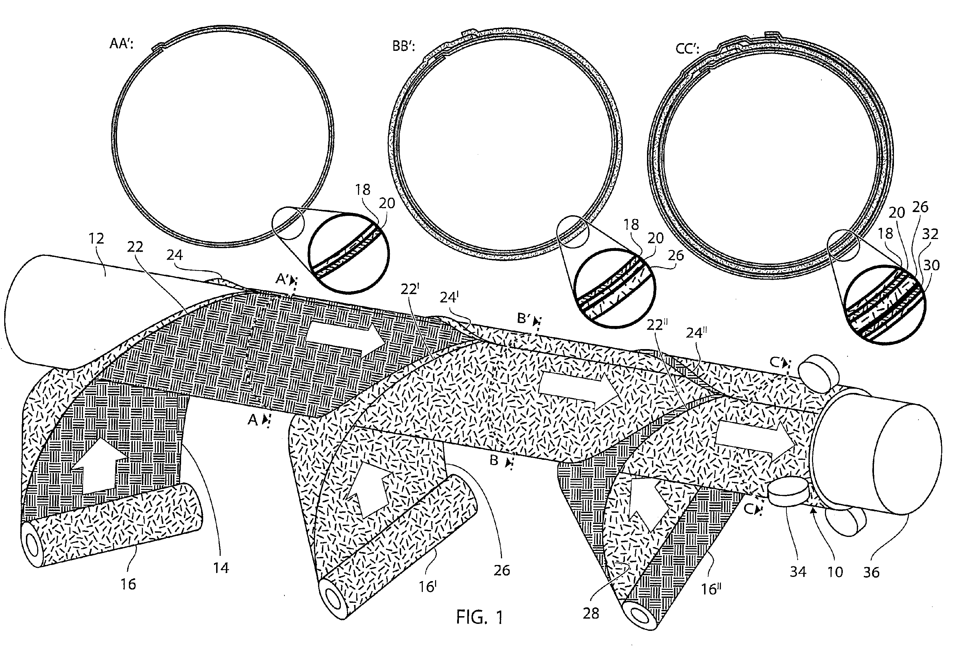

FIG. 1 shows a perspective view of the production method of the liner 10. The production method utilizes a cylindrical mandrel 12 onto which an inner two-layered part 14 is folded. The two-layered part 14 is provided continuously from a roll 16 in the direction of the arrow. As shown in the first cross sectional view A and the related close up view, the inner two-layered part 14 comprise an outwardly facing layer 18 of web material of radially and longitudinally oriented fibres which bond, e.g. by stiching, to an inwardly facing layer 20 of chopped strand mat material. The inner two-layered part 14 is folded to a tubular shape by overlapping the opposing first and second longitudinal edge sections 22,24. The inner two-layered part 14 is then fed over the mandrel 12 as indicated by the arrow.

As shown in the second cross sectional view B and the related close up view, the inner two-layered part 14 is encircled by an intermediate part 26 which is continuously fed from a roll 16' as indicated by the arrow. The intermediate part 26 comprises a layer of chopped strand mat having randomly oriented fibres. The intermediate part 26 is folded to a tubular shape outside the inner two-layered part 14 by overlapping the opposing first and second longitudinal edge sections 22',24' of the intermediate part 26. The inner two-layered part 14 and the intermediate part 26 are then together fed over the mandrel 12 as indicated by the arrow.

As shown in the third cross sectional view C and the related close up view, the intermediate part 26 is encircled by an outer two-layered part 28, which is continuously fed from a roll 16" as indicated by the arrow. The outer two-layered part 28 comprises an outwardly facing layer 30 of chopped strand mat material bonded to an inwardly facing layer 32 of web material of radially and longitudinally oriented fibres. The outer two-layered part 28 is folded to a tubular shape outside the intermediate part 26 by overlapping the opposing first and second longitudinal edge sections 22",24" of the outer two-layered part 28. The inner two-layered part 14, the intermediate part 26 and the outer two-layered part 28 are together forming the liner 10 which is fed over the mandrel 12 as indicated by the arrow.

The liner 10 is fed over the mandrel 12 by means of rollers 34. At the end 36 of the mandrel 12, the liner 10 may be impregnated, cut into suitable lengths and preferably after impregnation provided with an innermost and outermost protective plastic foil (not shown).

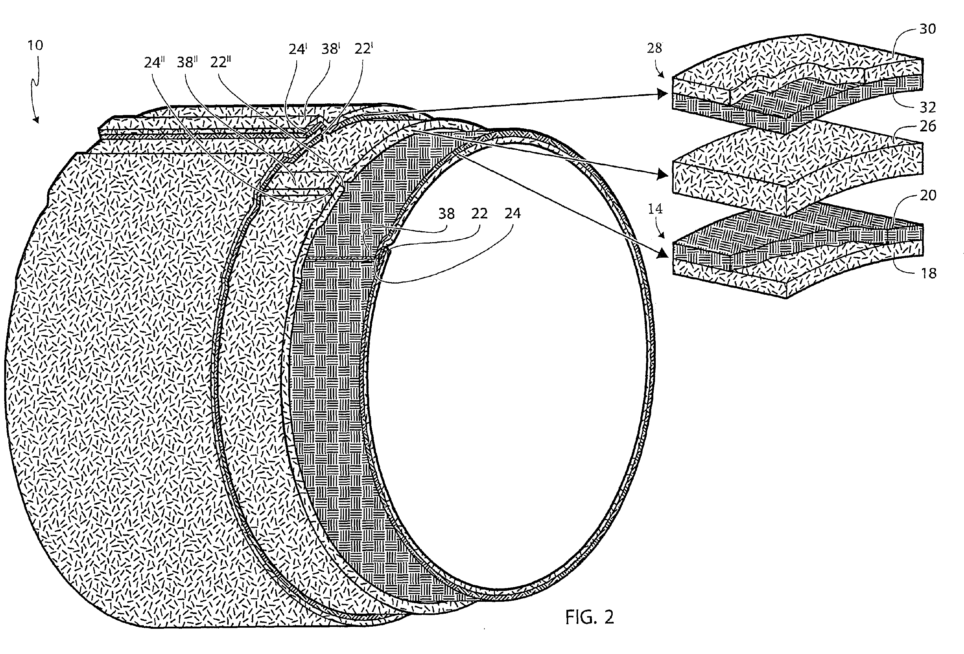

FIG. 2 shows a perspective view of the finished liner 10. The outwardly facing layer 30 of chopped strand mat material of the outer two-layered part 28 and the inwardly facing layer 18 of chopped strand mat material of the inner two-layered part 14 will be resin impregnated and when cured form a very hard and rigid surface inside the pipe line (not shown). Provided no outer foil is used, the liner 10 will also be able to stick to the walls of the pipe line in order to achieve a more secure positioning of the liner 10 within the pipeline, whereas provided a foil is used, the liner 10 will not be able to stick to the walls of the pipe line.

The outwardly facing layer 20 of web material of the inner two-layered part 14 and the inwardly facing layer 32 of web material of the outer two-layered part 28 both comprise radially and longitudinally oriented fibres. These layers provide a high tensile and compressive strength in both the radial and in the longitudinal direction. The longitudinal direction is understood to mean the direction of the pipe line.

The inside of the liner 10, i.e. the space in-between the layers of web material, is filled by at least one intermediate part 26 comprising a layer of chopped strand mat material. In this way, a sandwich structure is formed. A very strong structure is thereby achieved in which the tensile and compressive strength in the transversal and longitudinal direction is achieved by the web material 20, 32. The web material thus absorbs any bending forces applied to the liner 10. The shear forces applied to the liner are consequently absorbed by the impregnated intermediate part 26 of chopped strand mat material inside of the liner 10.

Both the web material and the chopped strand mat material may be impregnated by a resin, and may optionally be pre-cured.

Each of the inner two-layered parts 14, the intermediate part 26 and the outer two-layered part 28 are mutually overlapping at their respective opposing longitudinal edges 22,24,22',24',22",24". The liner is thus formed by parts 14,26,28 which from tubes which overlap themselves. The overlaps 38,38',38" are preferably mutually separated in order to reduce the bulge produced by the overlapping layers. Optionally, an innermost layer and an outermost layer of plastic film material (not shown) are applied to the liner 10 for preventing leakage and simplifying handling of the liner 10.

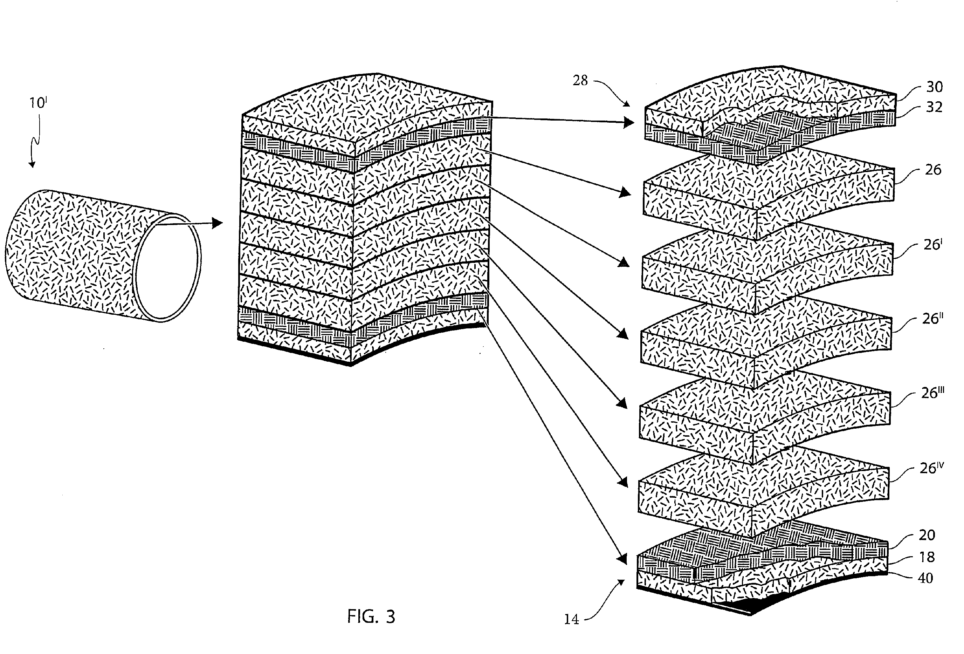

FIG. 3 shows a perspective view of an alternative embodiment of the liner 10'. The alternative liner 10' is similar to the previous liner 10; however, the liner 10' comprises additional intermediate parts 26', 26", 26"', 26^{IV}, each comprising a layer of chopped strand mat material and being located between the inner two-layered part 14 and the outer two-layered part 28. This embodiment is especially suitable for the relining of larger pipe lines. The liner 10' may include an innermost layer of fleece material 40.

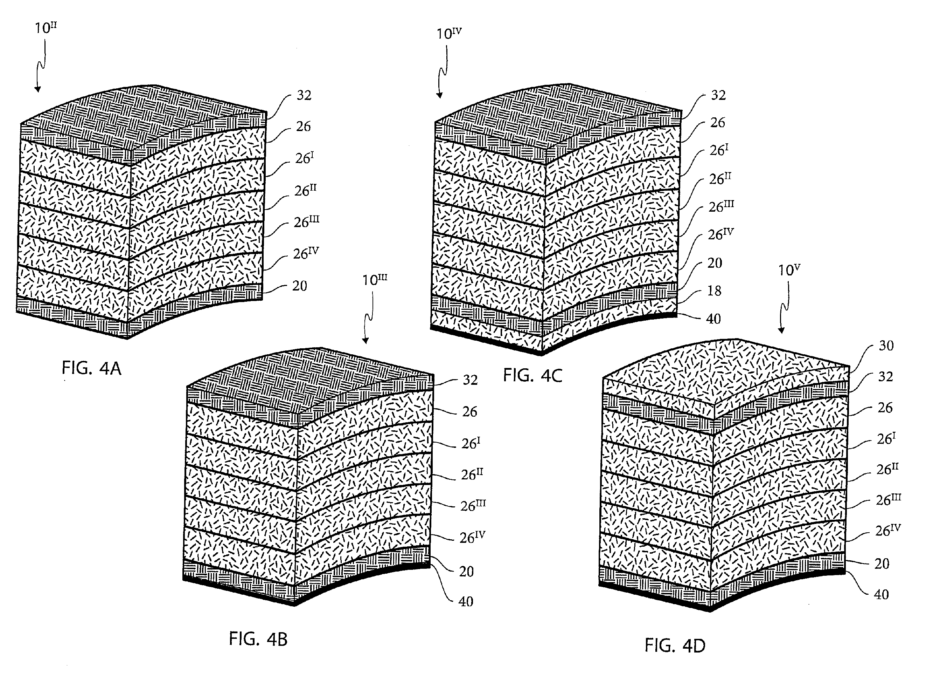

FIG. 4A shows a perspective view of a further alternative embodiment of the liner 10". The present embodiment includes an outer layer of web material 32 of radially and longitudinally oriented fibres, an inner layer 20 of web material of radially and longitudinally oriented fibres and multiple intermediate parts 26', 26", 26"', 26^{IV} of randomly oriented fibres, e.g. chopped strand mat material, and being located between the outer layer of web material 32 and the inner layer 20 of web material.

FIG. 4B shows a perspective view of a further alternative embodiment of the liner 10'" being similar to the liner 10" of fig 4A, however, additionally including an innermost layer of fleece material 40.

FIG. 4C shows a perspective view of a further alternative embodiment of the liner 10^{IV} being similar to the liner 10'" of fig 4B, however, additionally including an inner layer 18 of randomly oriented fibres, e.g. CSM (chopped strand mat) material, located between the inner layer of web material 20 and the innermost fleece layer 40.

FIG. 4D shows a perspective view of a further alternative embodiment of the liner 10^{V} being similar to the liner 10^{IV} of fig 4C, however, additionally including an outer layer 30 of randomly oriented fibres, e.g. CSM material, located outside the outer layer of web material 32. The inner layer 18 of randomly oriented fibres, e.g. CSM material, located between the inner layer of web material 20 and the innermost fleece layer 40, has been excluded.

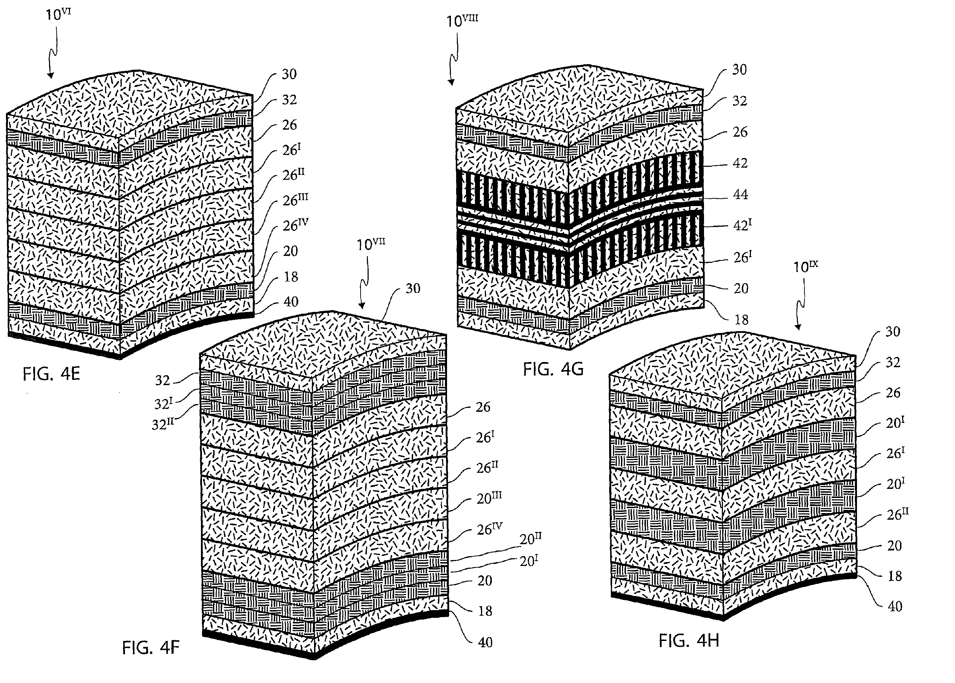

FIG. 4E shows a perspective view of a further alternative embodiment of the liner 10^{VI} being similar to the liner 10^{V} of fig 4D, however, the inner layer 18 of randomly oriented fibres, e.g. CSM material, located between the inner layer of web material 20 and the innermost fleece layer 40, has been included.

FIG. 4F shows a perspective view of a further alternative embodiment of the liner 10^{VII} being similar to the liner 10^{VI} of fig 4E, however, including multiple outer layers 32,32',32" and inner layers 20,20',20" of web material.

FIG. 4G shows a perspective view of a further alternative embodiment of the liner 10^{VIII} being similar to the liner 10 of fig 4F, except that between the outer web layer 32 and the inner web layer 20 is located, in order from outside to inside, an intermediate layer of randomly oriented fibres 26, an intermediate layer of felt material 42, an intermediate layer of Raschel material 44, an intermediate layer of felt material 42' and a further intermediate layer of randomly oriented fibres 26'.

FIG. 4H shows a perspective view of a further alternative embodiment of the liner 10^{VIII} being similar to the liner 10 of fig 4G, except that between the outer web layer 32 and the inner web layer 20 is located, in order from outside to inside, an intermediate layer of randomly oriented fibres 26, an intermediate layer of web material 20', an intermediate layer of randomly oriented fibres 26', an intermediate layer of web material 20' and a further intermediate layer of randomly oriented fibres 26".

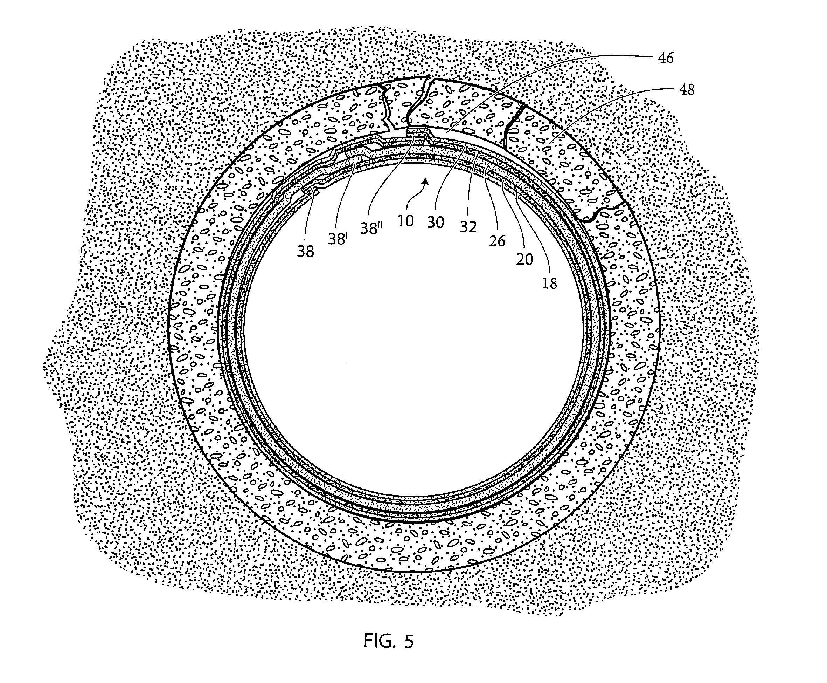

FIG. 5 is a perspective view of the installation of the liner 10 in a pipeline 48. Due to the overlaps 38,38',38" the liner 10 will have a radial flexibility and may adapt to variations in diameter of the pipeline 48. In the present situation, the wall of the pipe line 48 exhibits a small void 46. At the location of the void 46, the diameter of the pipeline 48 has increased slightly compared to the standard diameter of the pipe line 48. At the location of the void 46, the liner 10 will expand by reducing the overlaps 38, 38', 38", i.e. reducing the overlapping longitudinal edge sections and allowing the edges 22, 24, 22', 24', 22", 24" to approach each other. Conversely, in case the wall of the pipeline exhibits a protrusion, the diameter of the pipeline will decrease and the liner will expand to a lesser extent or may not expand at all, and the overlapping longitudinal edge sections will be larger and the edges 22, 24, 22', 24', 22", 24" will move apart. The liner 10 may be installed by the pulling method or the eversion method. The web material will prevent any excessive stretching of the liner 12.

From the above, it is evident that further liners including other combinations of layers than the liners illustrated above in connection with FIG. 4 may be readily conceivable to the skilled person and thus, any such liners which are readily conceivable by the skilled person and within the spirit of the present invention should be considered to be encompassed by the protective scope defined by the appended claims.

### LIST OF PARTS

- 10.: Liner
- 12.: Mandrel
- 14.: Inner two-layered part
- 16.: Roll
- 18.: Inwardly facing chopped strand mat material (CSM)
- 20.: Outwardly facing web material
- 22.: First edge
- 24.: Second edge
- 26.: Intermediate part (CSM)
- 28.: Outer two-layered part
- 30.: Outwardly facing chopped strand material (CSM)
- 32.: Inwardly facing web material
- 34.: Rollers
- 36.: Mandrel end
- 38.: Overlaps
- 40.: Fleece layer
- 42.: Needle felt
- 44.: Raschel material
- 46.: Void
- 48.: Pipe line

## Claims

1. A liner for renovating underground pipes such as sewer pipes, said liner comprising:
an inner part comprising a layer of web material of radially and longitudinally oriented fibres,
an intermediate part comprising a layer of randomly oriented fibres, said intermediate part encircling said inner part, and
an outer part comprising a layer of web material of radially and longitudinally oriented fibres, said outer part encircling said intermediate part, said inner part, intermediate part and outer part being resin impregnated or resin impregnable, each of said inner part, intermediate part and outer part being folded to a tubular shape by defining overlapping opposing first and second longitudinal edge sections.

2. The liner according to claim 1, wherein said inner part constitutes a two-layer part and wherein said outer part constitutes a two-layer part.

3. The liner according to claims 1 or 2, wherein said intermediate part constitutes a multiple layer part.

4. The liner according to any of the preceding claims, wherein said liner comprises an inner layer of fleece material.

5. The liner according to any of the preceding claims, wherein said inner two-layered part comprises an inwardly facing layer of randomly oriented fibres bonded to said layer of web material.

6. The liner according to any of the preceding claims, wherein said outer two-layered part comprises an outwardly facing layer of randomly oriented fibres bonded to layer of web material.

7. The liner according to any of the preceding claims, wherein said outer two-layered part and/or said inner two-layered part comprise further layers of web material of radially and longitudinally oriented fibres.

8. The liner according to any of the preceding claims, wherein said overlapping opposing longitudinal first and second edge sections are all located at the same side and/or opposing sides of the liner when said liner assumes a flat position.

9. The liner according to any of the preceding claims, wherein said layer of web material and/or said layer of randomly oriented fibres comprise glass fibres and/or polymeric fibres and/or any of carbon fibres, aramid fibres or sisal fibres.

10. The liner according to any of the preceding claims, wherein said web material comprises woven material, non-woven material or chopped strand mat material.

11. The liner according to any of the preceding claims, wherein said layer of randomly oriented fibres comprises chopped strand mat material, needle felt, Raschel, or alternatively or additionally foamed material.

12. The liner according to any of the preceding claims, wherein said liner further comprises an innermost liquid-tight plastic film.

13. The liner according to any of the preceding claims, wherein said liner hose further comprises an outer liquid-tight plastic film enclosing said outer part.

14. The liner hose according to any of the claims 3-13, wherein the number of intermediate parts is between 1 and 100, preferably between 2 and 10, such as 3, 4, 5, 6, 7, 8 or 9.

15. A method of producing a liner for renovating underground pipes such as sewer pipes by providing a mandrel, said method comprising the steps of:
positioning an inner part comprising a layer of web material of radially and longitudinally oriented fibres onto said mandrel such that said inner part is being folded to a tubular shape by defining overlapping opposing first and second longitudinal edge sections,
positioning an intermediate part comprising a layer of randomly oriented fibres encircling said inner part and being folded to a tubular shape by defining overlapping opposing first and second longitudinal edges sections, and
positioning an outer part comprising a layer of web material of radially and longitudinally oriented fibres, said outer part encircling said intermediate part and being folded to a tubular shape by defining overlapping opposing first and second longitudinal edges sections,
removing said liner from said mandrel, and
impregnating said liner with a resin.

16. A method of renovating a pipeline comprising the steps of:
providing a liner, said liner comprising:
an inner part comprising a layer of web material of radially and longitudinally oriented fibres,
an intermediate part comprising a layer of randomly oriented fibres, the intermediate part encircling the inner part, and
an outer part comprising a layer of web material of radially and longitudinally oriented fibres, said outer layer encircling said intermediate part,
said inner part, intermediate part and outer part being resin impregnated, each of the inner two-layered part, intermediate part and outer two-layered part being folded to a tubular shape by defining overlapping opposing first and second longitudinal edge sections,
inserting said liner into said pipeline, and
curing said liner.
